Europäisches Patentamt

European Patent Office

Office européen des brevets

(11) Publication number: 0 196 591
A2

# EUROPEAN PATENT APPLICATION

(21) Application number: 86104031.9

(22) Date of filing: 24.03.86

(51) Int. Cl.⁴: B 21 D 51/44

(30) Priority: 28.03.85 DK 1416/85

(43) Date of publication of application:
08.10.86 Bulletin 86/41

(84) Designated Contracting States:
AT BE CH DE FR GB IT LI LU NL SE

(71) Applicant: Schubert Seals A/S
Valiensbaekvej 24
DK-2605 Brondby(DK)

(72) Inventor: Larsen, Ib Seier
Tennisvej 34
DK-3100 Hornbaek(DK)

(72) Inventor: Bruus, Freddy
Symfonivej 9
DK-3650 Svestrup(DK)

(74) Representative: Prüfer, Lutz H., Dipl.-Phys.
Harthauser Strasse 25d
D-8000 München 90(DE)

(54) A method and apparatus for making metal caps and similar small metal articles.

(57) When metal caps for container closures and other small articles are made from samples cut or stamped from plate metal, the rough cut edges may be modified so that they obtain a more advantageous shape and/or surface. This may be obtained by compressing the metal forming said cut edge and possibly also the adjacent rim portion to such an extent that the compressive stress exceeds the yield point of the material. The cut edge may then be formed with a smooth surface and the adjacent rim portion may obtain a bead-like shape, if desired. Such a bead-like rim portion is advantageous on metal caps of the type used in connection with closures for infusion and injection bottles and normally being made from aluminium or aluminium alloys. Such metal caps are provided with a plastic cover which is brought into sealing engagement with the cap rim portion defining a central opening of the cap. The material, from which the plastic cover is made, may be substantially completely plastic, and the said engagement with the cap rim portion may then be obtained by deforming a skirt-like part of the plastic cover in a cold condition.

Fig. 1

# A METHOD AND APPARATUS FOR MAKING METAL CAPS AND SIMILAR SMALL METAL ARTICLES

The present invention relates to a method of making metal caps and similar articles from blanks stamped from plate metal and having at least one cut edge.

Closure caps for closing container openings, such as caps of cup-like shape adapted to hold a stopper in place in a container, may be made by stamping blanks from plate metal having a suitable thickness and by forming the blank into the shape desired by a drawing process. The cut edges formed on the blank by the stamping operating inevitably have a number of roughnesses or burrs, which are disadvantageous in many respects. During handling of the blanks or the caps formed therefrom in transporting, sorting, and mounting apparatuses such burrs may break off so as to form small metal particles which may then adhere to the blanks or the caps. Metal particles adhering to the inner surfaces of the caps may contaminate the contents of the containers or bottles on which the caps are subsequently mounted. Furthermore, because the cut edges of the caps may be rough, they may injure the fingers of persons handling the containers or bottles, on which the caps are mounted.

The above problems encountered in connection with known metal caps or other small articles made from a blank stamped from plate metal are solved by the method according to the invention which is characterized in comprising compressing at least part of the cut edge of the blank so as to generate a compressive stress in the metal forming said edge part exceeding the yield point of that metal. When exposed to such a compressive stress the metal material will yield so that any burrs or projections formed on the respective edge part will be compressed into and become united with the adjacent material of the edge part so that that edge part may obtain a smooth shape.

The method according to the invention may be used for treating a cut edge on any metal article which has been cut or stamped from plate metal, and the said cut edge may then be arranged in a suitable compression tool in which the cut edge may be exposed to the necessary compression to cause the metal material therein to yield. The method according to the invention may, however, advantageously be used in cases, where the stamped or cut blank is exposed to a forming treatment such as drawing, deep-drawing, or bending, and the cut edge may then advantageously be exposed to the compression simultaneously with or in connection with the forming treatment, such as a drawing process. The compression of the cut edge may advantageously take place in the same tool or apparatus in which the blank is drawn or formed.

A blank to be drawn is normally placed in a space defined between an inner surface part of a die member or female member and an outer surface part of a male member co-operating therewith. In that case the metal forming said edge part may be compressed by means of one or more piston members fitting into said space and being pressed against said cut edge part. The metal material forming the cut edge will then yield and fill the space completely so that the cut edge part is given a shape corresponding to that of the abutment surface or surfaces of the piston or pistons.

In some cases it is desired that the wall thickness of the finished cap or metal article shall be the same at the cut edge part as along the adjacent parts of the cap. However, quite often it is desired to form a reinforcement and/or an abutment or a shoulder along the cut edge part. According to the invention this may be obtained by deforming or upsetting the metal of said cut edge part into a bead-like rim portion by the compression.

The method according to the invention may advantageously be used for making various types of metal articles which may be shaped from a blank stamped from plate metal. However, the method according to the invention is considered especially important in connection with caps, which are used as closures for containers or bottles in the food and drug industry, or as parts of such closures. As an example, such metal caps, which are preferably made from aluminium or alloys thereof, may be of the type used in the closures disclosed in German Offenlegungsschrift No. 2,040,937, US Patent Specification No. 3,193,128, and Danish Patent Specification No. 147,477. Such caps define therein a central opening which is closed by a removable plastic cover member which is in sealing engagement with the cap rim portion defining the central opening. Closures of that type may be used for closing containers or bottles for infusion or injection mediums. By means of the method according to the present invention a metal cap of that type wherein the central opening is defined by a bead-like rim portion may be formed. Such bead-like rim portions may assist in obtaining a secure and sealing engagement between the plastic cover member and the metal cap.

The plastic cover member may be of any suitable plastic material and may be fastened to the metal cap in any known manner. As an example, an annular skirt may be formed on and extend from the inner side of the plastic cover member, which may be mounted on the metal cap by inserting the skirt through the central opening of the cap and by subsequently deforming the skirt around the adjacent rim portion of the metal cap by simultaneously exposing the skirt to heat. However, such heat deformation may give rise to certain difficulties, if the temperature is not accurately controlled. If the skirt is deformed by means of a deforming tool having a too high temperature, softened plastic material from the skirt may tend to adhere to the deformation tool so that thin plastic threads are formed when the tool is removed from the skirt after deformation of the same, and if the temperature of the deformation tool is too low, the deformation will be incomplete and the seal between the plastic cover member and the metal cap may be ineffective.

In order to avoid the above problems it is preferred to use a plastic cover member made from a plastic material, which is completely plastic or substantially "without memory", and the skirt may then be deformed at normal room temperature so as to be brought into sealing engagement with the inner surface of the rim portion of the cap. In contrast to normal plastic types, such plastic material which is "without memory" does not tend to attain its original shape to any substantial degree, when the closure comprising the metal cap and the plastic cover member is later exposed to an elevated temperature, for example a temperature of about 120°C, in connection with autoclaving or another sterilizing treatment.

In a manner known per se the plastic cover member may cover a greater or smaller part of the upper surface of the metal cap and possibly extend partly along the skirt of the metal cap, and the plastic cover member may be made from any plastic material, which is sufficiently plastic or "without memory". The said plastic material may, for example, be polypropylene or a similar plastic material which may contain suitable fillers imparting the desired characteristics to the plastic material. These fillers may, for example, be 5-10% of talcum powder or about 20% of chalk, for example 21.3%.

It should be understood that a plastic cover member of the said type made from a plastic material which is substantially completely plastic or "without memory" may also advantageously be used in connection with caps or cap members which are made in a known manner and mounted thereon by deformation in cold condition as described above.

The invention also relates to a forming apparatus, such as a drawing tool, for carrying out the above method and comprising a die or female member and a male member which members are movable in relation to each other to a blank forming position in which a space for receiving the cut edge part of the blank is defined between an inner surface part of the female member and an outer surface part of the male member, and the apparatus according to the invention is characterized in a piston member movable into said space so as to be pressed against said cut edge part for imparting a compressive stress thereto exceeding the yield point of the metal of said edge part.

The invention will now be further described with reference to the drawings, wherein

Fig. 1 is part of a sectional view of a container neck, for example the neck of a bottle containing an infusion or injection medium, provided with a closure which comprises a metal cap made by the method according to the invention,

Fig. 2 shows part of the sectional view of Fig. 1 in an enlarged scale,

Fig. 3 a sectional view as that of Fig. 2, where a plastic cover member forming part of the closure member is about to be removed, and

Figs. 4 and 5 are longitudinally sectional views of an apparatus or a tool for stamping circular blanks and for drawing such blanks so as to form metal caps of the type used in the closure of Figs. 1-3.

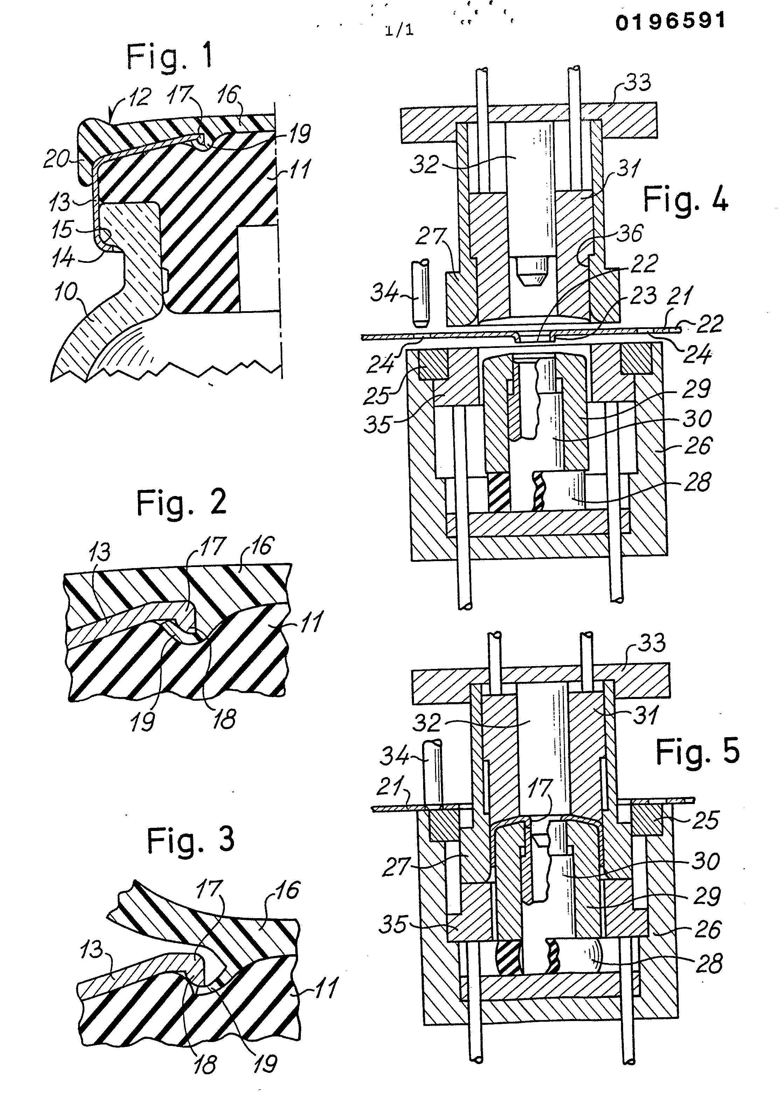

Fig. 1 shows a container or bottle 10, which may, for example, be a bottle for containing an infusion or injection medium. The neck opening of the container or bottle is closed by means of a disk or stopper 11, which may be made from rubber, soft plastic material, or a similar elastic and perforatable material. The stopper 11 may be surrounded by and fastened to the container 10 by means of a cap-like closure generally designated 12. This closure comprises an annular metal cap member 13, which is preferably made from aluminium or alloys thereof and forms the skirt of the closure. The lower rim portion 14 of the metal cap 13 is bent inwards so as to engage with a shoulder or abutment 15 formed on the container neck, whereby the closure is secured to the container. The closure 12 further comprises a cover member 16 made from plastic, rubber, or a similar flexible material. A central opening is formed in the cap member 13 and is defined by an inner rim portion 17 having a downwardly directed annular bead 18 formed thereon. An annular extension 19 formed on the lower surface of the cover member 16 has an outer diameter corresponding substantially to the diameter of the central opening in the cap member 13. The annular extension 19 of the cover member 16 has been passed through the central opening of the cap member so that the lower surface of the cover member 16 is kept in engagement with the upper surface of the cap member 13, whereafter the extension 19 has been deformed radially outwardly so as to embrace and sealingly engage with the bead 18. The cover member 16 comprises a circumferentially arranged skirt portion 20, which surrounds and engages with the upper part of the outer peripheral surface of the cap member 13 as shown in Fig. 1.

The cover member 16 and the annular extension 19 thereof are preferably, but not necessarily made from a plastic material of the type described above "without memory". If the plastic material is "without memory" the cover member 16 may be mounted on the cap member 13 by applying suitable compressive or impact forces to the annular extension 19 extending through the central opening by means of a suitable tool without any heating, whereby the free end of the extension 19 is forced to embrace the bead 18 and be brought into sealing engagement therewith. However, it is also possible to use other types of plastic material previously used for this purpose, and the extension 19 may then be heat-sealed around the bead 18, or the extension 19 may be preformed with a hook-shaped cross-section so that the annular extension may snap into engagement with the bead 18 when the cover member 16 is pressed into engagement with the cap member 13.

When the container or bottle 10 shown in Fig. 1 and the contents thereof have been sterilized, for example by autoclaving, the cover member 16 serves to maintain the upper surface of the stopper 11 exposed by the central opening in a sterile condition till the contents of the bottle is to be used. The skirt portion 20 of the cover member 16 may then be gripped and pressed away from the cap member 13, whereby the annular extension 19 of the cover member may be brought out of engagement with the bead 18 as illustrated in Fig. 3, so that the cover member 16 may be removed.

The cap member 13 and the bead 18 formed thereon may be made by means of the stamping and drawing tool shown in Figs. 4 and 5. Cap members 13 of the type shown on the drawings may be made from a strip of plate metal 21, in which a number of equidistantly spaced circular openings 22 defined by a bent rim portion 23 are stamped. The diameter of the holes 22 corresponds to the diameter of the central opening in the cap member 13 being made. Equidistantly positioned guide holes 24 for positioning the plate metal strip 21 in relation to the tool are positioned between the openings 22.

The tool or apparatus shown in Figs. 4 and 5 comprises a lower annular cutting or stamping member 25 which is mounted in a stationary frame 26, and an axially displaceably mounted annular upper cutting or stamping member 27. An annular male member 29 is mounted on the frame 26 by means of an elastically resilient, annular supporting member 28. A piston or plunger 30 is arranged within the annular male

KEV/H/50/PA/25389b/04.03.86

member 29 and fixedly mounted on the frame 26 so that the male member 29 may be axially displaced in relation to the piston 30, when the supporting member 28 is compressed and deformed. An annular holding member 31 is arranged within the upper stamping member 27 so as to be axially displaceable in relation to the holding member, and a mandrel 32 which extends into the annular holding member 31, is mounted on a supporting member 33 which also supports the upper stamping member 27.

The tool or apparatus shown in Figs. 4 and 5 operates as follows:

The plate metal strip 21 is moved to a position in which one of the circular openings 22 therein is arranged coaxially with the mandrel 32, and the plate metal strip 21 is retained in the correct position by means of a feeler pin 34, which is moved downwards into engagement with one of the guide holes 24. Fig. 4 shows the tool or apparatus with the parts thereof in their starting position. An upper tool assembly comprising the upper stamping member, the holding member 31, the mandrel 32, and the supporting member 33 is now moved downwards so as to cut an annular blank with the opening 22 arranged centrally therein. When the upper tool assembly is moved further downwards the cut blank is clamped between the end surfaces of the male member 29 and the holding member 31 immediately after the stamping operation. Thereby the downward movement of the holding member 31 is stopped, while the downward movement of the upper stamping member 27 is continued, while an annular abutment member 35 is pressed downwards within the frame 26. The inner lower cylindrical surface part 36 of the upper stamping member 27 will then function as a die, which cooperates with the male member 29 so as to form the skirt portion of the cap. The lower end of the mandrel 32 is simultaneously moved into the central circular opening 22 of the blank, and the downwardly directed pressure applied to the supporting member 33 and, consequently, to the mandrel 32 causes a deformation of the annular supporting member 28 of the male member 29 as shown in Fig. 5. This means that the male member 29 and the blank are moved downwards in relation to the piston or plunger 30. This causes a heavy compression of the bent rim portion 23 of the blank within the annular space defined by the lower end of the mandrel 32, the inner upper surface part of the male member 29, and the upper annular end surface of the piston or plunger 30. The supporting member 33 is imposed to such a high downwardly directed force that the compressive stress of the material forming the bent rim portion 23 will exceed the yield point of the material so that the metal material is caused to yield and to completely fill the said annular space. In this manner it is possible to form a bead-like cap rim portion 17 as that shown in Fig. 1-3. It should be understood that it is possible to obtain any other desired shape by forming the space in which the cut edge or the cap rim portion is compressed correspondingly. Thus, it is also possible to obtain a wall thickness of the cap rim portion corresponding to the thickness of the adjacent cap wall. The apparatus or tool may be modified so that the lower rim portion 14 of the skirt of the cap member is additionally or alternatively compressed so as to obtain yielding of the metal therein. Thus, also the rim portion 14 may be provided with a bead-like formation or provided with a smooth surface.

It should be understood that while the invention has been explained specifically in connection with closure caps, the method according to the invention may also be used for making other metal articles formed from a blank which has been cut or stamped, or a blank which for other reasons, has a rough edge or rim portion which should be made smooth or provided with a bead-like formation.

1

CLAIMS.

1. A method of making metal caps and similar small articles from blanks stamped from plate metal (21) and having at least one cut edge,
characterized in compressing at least part of the cut edge of the blank so as to generate a compressive stress in the metal forming said edge part exceeding the yield point of that metal.

2. A method according to claim 1, wherein said article is formed from said blank by a drawing process,
characterized in that the metal forming said cut edge part of the blank is compressed in connection with the drawing process.

3. A method according to claim 2,
characterized in that the cut edge part of said blank is placed in a space defined between the inner surface of a die or female member (29) and the outer surface of a male member (32) co-operating therewith, and that the metal forming said edge part is compressed by means of at least one piston member (30) fitting into said space and being pressed against said cut edge part.

4. A method according to any of the claims 1-3,
characterized in that the metal of said cut edge part is deformed into a bead-like rim portion (17) by the compression.

5. A method according to any of the claims 1-4,
characterized in that the cap is of the type used for infusion or injection bottles (10) and having a central opening to be closed by a cover member (16) made from plastic material and being in sealing engagement with the rim portion (17) of the cap defining said central opening.

6. A method according to claim 5,
characterized in that the cover member (16) is made from a plastic material which is substantially plastic and comprises a skirt (19), said method comprising passing said skirt through the central opening of the cap from the outer side thereof and pressing said skirt into sealing engagement with the inner side of said cap rim portion (17).

7. A method according to claim 5 or 6,
characterized in that the cover member (16) is made from a plastic containing 5-10% of talcum powder or about 20% of chalk as a filler.

8. A method according to claim 7,
characterized in that said plastic is polypropylene.

9. A forming apparatus for carrying out the method according to any of the claims 1-8 and comprising a die or female member (29) and a male member (32), which members are movable in relation to each other to a blank forming position in which a space for receiving the cut edge part of the blank is defined between an inner surface part of the female member and an outer surface part of the male member,
characterized in a piston member (30) movable into said space so as to be pressed against said cut edge part for imparting a compressive stress thereto exceeding the yield point of the metal of said edge part.

0196591

0196591

Fig. 1

Fig. 2

Fig. 3

Fig. 4

Fig. 5